# EUROPEAN PATENT APPLICATION

(11) **EP 4 835 971 A1**
(43) Date of publication of application: **04.11.2026**
(21) Application number: 24912747.3
(22) Date of filing: 23.12.2024
(51) Int. Cl.: H01M 4/13, H01M 4/36, H01M 4/38, H01M 4/58, H01M 4/62

(54) **POSITIVE ELECTRODE MIXTURE PRECURSOR AND PRODUCTION METHOD THEREFOR**

(30) Priority: 27.12.2023 JP 2023220596
(71) Applicant: Idemitsu Kosan Co.,Ltd., Tokyo 100-8321 (JP)
(72) Inventor: HANIU, Yamato, Tokyo 100-8321 (JP); YAMAGUCHI, Hiroshi, Tokyo 100-8321 (JP); NAKATA, Hiroya, Tokyo 100-8321 (JP)
(74) Representative: Vossius & Partner Patentanwälte Rechtsanwälte mbB
(86) International application number: PCT/JP2024/045517
(87) International publication number: WO 2025/142860

(57) **Abstract**

A positive electrode mixture precursor containing a sulfur-based active material, a porous carbon material, and at least one of an ion conductor and a variant of said ion conductor, wherein the sulfur-based active material is present in at least part of the interior and exterior of the carbon material, and at least part of the ion conductor and the variant of said ion conductor covers at least part of the sulfur-based active material.

## Description

### Technical Field

The present invention relates to a positive electrode mixture precursor and a method of producing the same. More specifically, the present invention relates to a positive electrode mixture precursor and a positive electrode mixture each capable of improving charge-discharge characteristics of a lithium ion battery, and methods of producing the positive electrode mixture precursor and the positive electrode mixture.

### Background Art

A high battery capacity is required in a lithium ion battery. To improve the battery capacity, a method including using sulfur for a positive electrode has been investigated because sulfur has a large theoretical capacity. However, when sulfur is used for the positive electrode, lithium ion conductivity and electron conductivity in the positive electrode need to be secured because sulfur has low lithium ion conductivity and low electron conductivity.

To solve the above-mentioned problem, a positive electrode mixture in which sulfur, a carbon material, phosphorus pentasulfide, a solid electrolyte, and the like are formed into a composite by mechanical milling with a planetary ball mill has been investigated (see, for example, Patent Literatures 1 and 2). In addition, a positive electrode mixture containing sulfur, a carbon material having pores, a solid electrolyte, and the like in which the solid electrolyte is arranged in a pore of the carbon material from a solution state has been investigated (see, for example, Patent Literatures 3 and 4).

### Citation List

### Patent Literature

[PTL 1] JP 7156157 B2
[PTL 2] JP 6061139 B2
[PTL 3] JP 7283657 B2
[PTL 4] WO 2023/187466 A1

### Summary of Invention

It is required to further improve the charge-discharge characteristics of a lithium ion battery as compared to those of the related art. In such normal mixing by mechanical milling as disclosed in each of Patent Literatures 1 and 2, the formation of an interface between sulfur and a carbon material, and a solid electrolyte, phosphorus pentasulfide, or the like in a composite to be obtained is insufficient, and hence there has been a limitation on the formation of an ion conduction path to sulfur and the carbon material. In such method of precipitating a solid electrolyte from a solution as disclosed in each of Patent Literatures 3 and 4, the formation of an interface between sulfur and a carbon material, and the solid electrolyte in a composite to be obtained is insufficient, and hence there has been a limitation on the formation of an ion conduction path to sulfur and the carbon material.

An object of the present invention is to provide a positive electrode mixture precursor and a positive electrode mixture each capable of improving the charge-discharge characteristics of a lithium ion battery.

The inventors of the present invention have made extensive investigations, and as a result, have found that the charge-discharge characteristics of a lithium ion battery serving as the final product are improved by preparing a precursor, which is obtained by mixing a mixture or a composite of a sulfur-based active material and a carbon material, and an ion conductor in a molten state, in advance in the production of a positive electrode mixture. Thus, the inventors have completed the present invention.

According to the present invention, there is provided the following positive electrode mixture precursor and the like.
1. A positive electrode mixture precursor including a sulfur-based active material; a carbon material having pores; and at least one of an ion conductor and a modified product of the ion conductor,
   wherein the sulfur-based active material is present in at least part of an inside and an outside of the carbon material, and
   at least part of the ion conductor and the modified product of the ion conductor covers at least part of the sulfur-based active material.
2. The positive electrode mixture precursor according to Item 1, wherein in a P2p spectrum in surface elemental analysis thereof by X-ray photoelectron spectroscopy, at least one of the following formulas (1) and (2) is satisfied: ${I}_{A} / {I}_{B} > 0.8$ (1) ${I}_{C} / {I}_{B} > 0.8$ (2) wherein I_{A} represents a signal intensity at a position A where a binding energy is around 135.4 eV, I_{B} represents a signal intensity at a position B where the binding energy is around 134.25 eV, and I_{C} represents a signal intensity at a position C where the binding energy is around 133.0 eV.
3. The positive electrode mixture precursor according to Item 2, wherein at least one of the ratio I_{A}/I_{B} and the ratio I_{C}/I_{B} is 1.0 or more.
4. The positive electrode mixture precursor according to Item 1, wherein an elemental ratio C/P of a carbon element to a phosphorus element determined by surface elemental analysis thereof by X-ray photoelectron spectroscopy is 20 or less.
5. The positive electrode mixture precursor according to Item 1, wherein a main component occupancy rate is 95.0% or more in elemental mapping image analysis of a scanning electron microscope image thereof by energy dispersive X-ray spectroscopy.
6. The positive electrode mixture precursor according to any one of Items 1 to 5, wherein a mass ratio of a total of the sulfur-based active material, and the ion conductor and the modified product of the ion conductor is smaller than 5.00 to the carbon material.
7. The positive electrode mixture precursor according to any one of Items 1 to 6, wherein the ion conductor has a melting point of from 130°C to 450°C.
8. The positive electrode mixture precursor according to any one of Items 1 to 7, wherein the ion conductor is a lithium ion conductive material containing one or more kinds of elements selected from lithium, boron, oxygen, and phosphorus, or a precursor thereof.
9. The positive electrode mixture precursor according to any one of Items 1 to 8, wherein the ion conductor includes phosphorus sulfide.
10. The positive electrode mixture precursor according to any one of Items 1 to 9, wherein the ion conductor includes phosphorus pentasulfide.
11. The positive electrode mixture precursor according to any one of Items 1 to 10, wherein the sulfur-based active material includes elemental sulfur.
12. A method of producing a positive electrode mixture precursor including: mixing at least one of a composite or a mixture of a sulfur-based active material and a carbon material having pores with an ion conductor in a molten state.
13. The method of producing it according to Item 12, wherein the composite of the sulfur-based active material and the carbon material having pores is mixed with the ion conductor in a molten state.
14. The method of producing it according to Item 12 or 13, wherein a mass ratio of a total of the sulfur-based active material and the ion conductor is smaller than 5.00 to the carbon material.
15. The method of producing it according to any one of Items 12 to 14, wherein the ion conductor has a melting point of from 130°C to 450°C.
16. The method of producing it according to any one of Items 12 to 15, wherein the ion conductor is a lithium ion conductive material containing one or more kinds of elements selected from lithium, boron, oxygen, and phosphorus, or a precursor thereof.
17. The method of producing it according to any one of Items 12 to 16, wherein the ion conductor includes phosphorus sulfide.
18. The method of producing it according to any one of Items 12 to 17, wherein the ion conductor includes phosphorus pentasulfide.
19. The method of producing it according to any one of Items 12 to 18, wherein the sulfur-based active material includes elemental sulfur.
20. A positive electrode mixture including the positive electrode mixture precursor according to any one of Items 1 to 11.
21. The positive electrode mixture according to Item 20, further including a solid electrolyte.
22. A positive electrode including the positive electrode mixture according to Item 20 or 21.
23. A lithium ion battery including the positive electrode mixture according to Item 20 or 21, or the positive electrode according to Item 22.

The present invention can provide the positive electrode mixture precursor and the positive electrode mixture each capable of improving the charge-discharge characteristics of a lithium ion battery. In addition, the usage amount of a solid electrolyte, which is often produced by a complicated production process, can be reduced, and hence a reduction in cost can be expected.

### Brief Description of Drawings

FIG. 1 is a P2p spectrum of Example 1.
FIG. 2 is a P2p spectrum of Example 2.
FIG. 3 is a P2p spectrum of Example 3.
FIG. 4 is a P2p spectrum of Example 4.
FIG. 5 is a P2p spectrum of Example 5.
FIG. 6 is a P2p spectrum of Example 6.
FIG. 7 is a P2p spectrum of Comparative Example 2.
FIG. 8 is an S2p spectrum of Example 1.
FIG. 9 is an S2p spectrum of Example 2.
FIG. 10 is an S2p spectrum of Comparative Example 2.
FIG. 11(a) is image data in which the EDS mappings of C, P, and S of Example 1 are superimposed, and FIG. 11(b) is an image obtained by subjecting FIG. 11(a) to image processing.
FIG. 12(a) is image data in which the EDS mappings of C, P, and S of Example 2 are superimposed, and FIG. 12(b) is an image obtained by subjecting FIG. 12(a) to image processing.
FIG. 13(a) is image data in which the EDS mappings of C, P, and S of Comparative Example 2 are superimposed, and FIG. 13(b) is an image obtained by subjecting FIG. 13(a) to image processing.
FIG. 14(a) is image data in which the EDS mappings of C, P, and S of Comparative Example 3 are superimposed, and FIG. 14(b) is an image obtained by subjecting FIG. 14(a) to image processing.
FIG. 15 is an X-ray diffraction (XRD) chart of Example 1.
FIG. 16 is an XRD chart of Example 2.
FIG. 17 is an XRD chart of Comparative Example 2.
FIG. 18 is an XRD chart of Comparative Example 3.
FIG. 19 is a result of the waveform separation of a solid ³¹P-NMR spectrum of Example 1.
FIG. 20 is a result of the waveform separation of a solid ³¹P-NMR spectrum of Comparative Example 2.

### Description of Embodiments

A positive electrode mixture precursor according to one embodiment of the present invention includes a sulfur-based active material, a carbon material having pores, and at least one of an ion conductor and a modified product of the ion conductor (hereinafter, the ion conductor and the modified product of the ion conductor may be collectively referred to as "ion conductor"). In addition, the positive electrode mixture precursor is characterized in that the sulfur-based active material is present in at least part of the inside and outside of the carbon material, and at least part of the ion conductor covers at least part of the sulfur-based active material.

A form in which "at least part of the ion conductor covers at least part of the sulfur-based active material" is obtained, for example, by providing a step of mixing at least one of a composite or a mixture of the sulfur-based active material and the carbon material having pores with the ion conductor in a molten state at the time of the production of the positive electrode mixture precursor. When the composite and the mixture are mixed with the ion conductor in a molten state, a liquid ion conductor coats the surface of the sulfur-based active material and/or the carbon material. Accordingly, a structure in which the ion conductor covers the surface of the sulfur-based active material and/or the carbon material is obtained through cooling after the mixing treatment. The covering structure of the ion conductor is a new structure that is not formed through conventional mixing by mechanical milling. A strong interface of the ion conductor is formed on the sulfur-based active material and the carbon material by the covering structure of the ion conductor. Probably as a result of the foregoing, ion conductivity to the sulfur-based active material and the carbon material is improved to accelerate the reaction of the sulfur-based active material, and hence the charge-discharge characteristics of a lithium ion battery are improved.

A form in which "at least part of the ion conductor covers at least part of the sulfur-based active material" can be recognized by various kinds of analysis. The positive electrode mixture precursor of the present invention may be expressed, for example, as the following items (A1) to (A10).

(A1) In a P2p spectrum in surface elemental analysis of the positive electrode mixture precursor by X-ray photoelectron spectroscopy, at least one of the following formulas (1) and (2) is satisfied: ${I}_{A} / {I}_{B} > 0.8$ (1) ${I}_{C} / {I}_{B} > 0.8$ (2) wherein I_{A} represents a signal intensity at a position A where a binding energy is around 135.4 eV, I_{B} represents a signal intensity at a position B where the binding energy is around 134.25 eV, and I_{C} represents a signal intensity at a position C where the binding energy is around 133.0 eV.

The term "around" means that the position of the binding energy may slightly vary depending on a measuring apparatus and the like. For example, the position A means a peak appearing within the range of 135.0 eV or more and 136.5 eV or less, the position B means a peak appearing within the range of 133.5 eV or more and less than 135.0 eV, and the position C means a peak appearing within the range of 132.0 eV or more and less than 133.5 eV. In addition, when a clear peak does not appear at each position, a binding energy of 135.4 eV is set as the position A, a binding energy of 134.25 eV is set as the position B, and a binding energy of 133.0 eV is set as the position C.

In one embodiment, the ratio I_{A}/I_{B} is preferably 1.0 or more, more preferably 1.1 or more, particularly preferably 1.2 or more. In addition, the ratio I_{C}/I_{B} is preferably 1.0 or more, more preferably 1.1 or more, particularly preferably 1.2 or more.

The upper limit of each of the ratio I_{A}/I_{B} and the ratio I_{C}/I_{B} is not limited, but is, for example, 5.0 or less.

(A2) The elemental ratio C/P of a carbon element to a phosphorus element determined by surface elemental analysis thereof by X-ray photoelectron spectroscopy is 20 or less.

(A3) A main component occupancy rate is 95.0% or more in elemental mapping image analysis of a scanning electron microscope image of the positive electrode mixture precursor by energy dispersive X-ray spectroscopy.

(A4) The rate of change of the elemental ratio C/P of a carbon element to a phosphorus element determined by the surface elemental analysis of the positive electrode mixture precursor by X-ray photoelectron spectroscopy before and after its GCIB treatment is 0.95 or more.

(A5) The rate of change of the elemental ratio C/P of a carbon element to a phosphorus element determined by the surface elemental analysis of the positive electrode mixture precursor by X-ray photoelectron spectroscopy before and after its Ar sputtering treatment is 0.4 or more.

(A6) The positive electrode mixture precursor includes the sulfur-based active material, the carbon material having pores, and phosphorus sulfide, and the area ratio of the peak of P₂S₅ in its solid ³¹P-NMR measurement is 60% or less.

(A7) The positive electrode mixture precursor includes the sulfur-based active material, the carbon material having pores, and phosphorus sulfide, and the total of the area ratios of the peaks of P₂S₆⁴⁻, P₂S₇⁴⁻, and PS₄²⁻ in its solid ³¹P-NMR measurement is 30% or more.

(A8) The specific surface area of the positive electrode mixture precursor is 7.5 m²/g or less.

(A9) As a result of X-ray diffraction measurement, the ion conductor and the modified product of the ion conductor are amorphous.

(A10) The ratio (S₈ peak/PSx peak) of the area of the peak of S₈ to the area of the peak of PSx in an S2p spectrum in the surface elemental analysis of the positive electrode mixture precursor by X-ray photoelectron spectroscopy is 15 or less.

The above-mentioned items (A1) to (A10) each independently represent one embodiment of the positive electrode mixture precursor of the present invention. In addition, the positive electrode mixture precursor of the present invention may be specified by freely combining the above-mentioned items (A1) to (A10). Measurement methods for physical properties described in the above-mentioned items (A1) to (A10) are described in Examples to be described later.

In one embodiment, the positive electrode mixture precursor is free of any solid electrolyte other than the ion conductor and the modified product of the ion conductor. Specifically, the positive electrode mixture precursor is substantially free of a Li element in a solid electrolyte.

In one embodiment, the mass ratio of the total of the sulfur-based active material (S), and the ion conductor containing a phosphorus element and the modified product of the ion conductor is smaller than 5.00 to the carbon material (C). For example, when the ion conductor is phosphorus pentasulfide, the mass ratio [(S+P₂S₅)/C] is smaller than 5.00. When the mass ratio is less than 5.00, the charge-discharge characteristics of a lithium ion battery are further improved. The above-mentioned mass ratio may be 4.80 or less, 4.50 or less, 4.30 or less, 4.00 or less, 3.70 or less, or 3.50 or less.

The above-mentioned mass ratio may be adjusted by the blending amount of each constituent material.

The positive electrode mixture precursor of the present invention is obtained, for example, by a production method including a step of mixing at least one of a composite or a mixture of a sulfur-based active material and a carbon material having pores with an ion conductor in a molten state.

Although the sulfur-based active material is not particularly limited, examples thereof include sulfur, lithium sulfide (Li₂S), lithium polysulfide (Li₂Sₙ: "n" satisfies 1<n≤8), titanium sulfide (TiS₂), molybdenum sulfide (MoS₂), iron sulfide (FeS or FeS₂), copper sulfide (CuS), nickel sulfide (Ni₃S₂), and sulfur-containing polymer compounds. Of those, sulfur is preferred.

Although sulfur is not particularly limited, sulfur having as high a purity as possible is preferred. Specifically, the purity is preferably 95% by mass or more, more preferably 96% by mass or more, particularly preferably 97% by mass or more.

Examples of the crystal system of sulfur include α-sulfur (orthorhombic), β-sulfur (monoclinic), γ-sulfur (monoclinic), and amorphous sulfur. These may be used alone, or two or more kinds thereof may be used in combination.

The ion conductor is, for example, a lithium ion conductive material containing one or more kinds of elements selected from lithium, boron, oxygen, phosphorus, a halogen, and antimony, or a precursor thereof. The ion conductor preferably includes a lithium ion conductive material containing one or more kinds of elements selected from lithium, boron, oxygen, and phosphorus, or a precursor thereof.

The term "lithium ion conductive material containing one or more kinds of elements selected from lithium, boron, oxygen, phosphorus, a halogen, and antimony" as used herein means a material that maintains a solid at 25°C under a nitrogen atmosphere and has an ion conductivity resulting from a lithium ion. In addition, the term "precursor of a lithium ion conductive material containing one or more kinds of elements selected from lithium, boron, oxygen, phosphorus, a halogen, and antimony" means a material, which forms a compound containing lithium by reacting with a lithium metal or a lithium ion when used as an active material of a lithium ion battery, and which becomes the above-mentioned lithium ion conductive material.

The term "halogen" as used herein means elements, such as fluorine, chlorine, bromine, and iodine.

The melting point of the ion conductor is preferably from 130°C to 450°C, more preferably from 220°C to 450°C because the ion conductor is turned into a melt by heating. In addition, the melting point of the ion conductor is preferably as low as possible, for example, 440°C or less, 430°C or less, 420°C or less, 410°C or less, or 400°C or less. Elemental sulfur, which is listed as an example of the sulfur-based active material, has a boiling point of about 450°C. It is conceivable that when elemental sulfur is mixed with a melt of a substance having a melting point equal to or more than the boiling point, elemental sulfur volatilizes to make it impossible to obtain a desired positive electrode mixture precursor. In addition, when a temperature in the step is lowered, energy at the time of the production of the positive electrode mixture precursor can be reduced, and the reduction leads to a reduction in cost.

Examples of the lithium ion conductive material include lithium borohydride, LiBF₄, an organic lithium salt, and a polymer electrolyte such as polyethylene oxide. In addition, examples of the precursor of the lithium ion conductive material include phosphorus sulfide such as phosphorus pentasulfide; red phosphorus; boron sulfide; phosphorus pentoxide; and tin. These compounds may be used alone, or two or more kinds thereof may be used in combination.

Examples of the organic lithium salt include lithium salts of bis(perfluoroalkylsulfonyl)imides, such as lithium bis(trifluoromethanesulfonyl)imide, lithium bis(fluorosulfonyl)imide, lithium (fluorosulfonyl)(trifluoromethanesulfonyl)imide, lithium bis(pentafluoroethanesulfonyl)imide, and lithium bis(nonafluorobutanesulfonyl)imide; lithium salts of perfluoroalkylsulfonimides such as a 4,4,5,5-tetrafluoro-1,3,2-dithiazolidine-1,1,3,3-tetraoxide lithium salt; lithium salts of fluorosulfonylimides; lithium trifluoromethanesulfonate; lithium salts of carboxylic acids, such as lithium acetate, lithium propionate, and lithium butyrate; lithium salts of organic sulfonic acids, such as lithium dodecylbenzenesulfonate and lithium p-styrenesulfonate; and lithium salts of organic phosphoric acids.

Each of those organic lithium salts is preferably used together with an ion conductive polymer or an ionic liquid. In this case, the impartment of higher lithium conductivity can be expected.

The ion conductor is preferably one or more compounds selected from the group consisting of phosphorus sulfide; red phosphorus; boron sulfide; phosphorus pentoxide; and a polymer electrolyte such as polyethylene oxide, the compounds being each substantially free of a lithium element. The ion conductor that is substantially free of a lithium element may have a high affinity for the sulfur-based active material or the carbon material.

The ion conductor is more preferably one or more compounds selected from the group consisting of phosphorus sulfide; red phosphorus; and phosphorus pentoxide, the compounds each containing a phosphorus element.

Examples of the phosphorus sulfide include phosphorus trisulfide (P₄S₃), phosphorus pentasulfide (P₂S₅), phosphorus heptasulfide (P₄S₇), and tetraphosphorus pentasulfide (P₄S₅). In addition, phosphorus sulfide may have a dimer or polysulfide structure, or may be a mixture thereof. Phosphorus pentasulfide, which is expected to react with lithium to form a sulfide solid electrolyte showing high ion conductivity, is particularly preferred.

The content of phosphorus sulfide or phosphorus pentasulfide with respect to the entirety of the ion conductor is 50% by mass or more, 80% by mass or more, 95% by mass or more, or 99% by mass or more, and is substantially 100% by mass. When the content is substantially 100% by mass, an unavoidable impurity may be included.

Examples of the carbon material having pores include carbon black, such as ketjen black, acetylene black, Denka black, thermal black, channel black, or CNovel (trademark); graphite; and activated carbon. These may be used alone, or two or more kinds thereof may be used in combination.

In one embodiment, the BET specific surface area of the carbon material is 50 m²/g or more and 6,000 m²/g or less. Thus, a wide contact interface between the carbon material and the sulfur-based active material can be formed, and hence the utilization ratio of the sulfur-based active material can be increased.

The BET specific surface area is 70 m²/g or more, 100 m²/g or more, 1,000 m²/g or more, 1,500 m²/g or more, 2,000 m²/g or more, 2,500 m²/g or more, or 3,000 m²/g or more. In addition, the BET specific surface area is preferably 5,500 m²/g or less, more preferably 5,000 m²/g or less.

In addition, the pore volume of the carbon material is 0.5 cm³/g or more and 6 cm³/g or less. Thus, a pore of the carbon material can be impregnated with the sulfur-based active material, and hence the capacity of a battery can be further improved.

The pore volume is preferably 0.7 cm³/g or more, more preferably 1.0 cm³/g or more. In addition, the pore volume is preferably 5.5 cm³/g or less, more preferably 5.0 cm³/g or less.

In the present invention, the BET specific surface area and the pore volume may be determined by using a nitrogen adsorption isotherm obtained by causing the carbon material to adsorb a nitrogen gas under liquid nitrogen temperature. Specifically, the BET specific surface area may be calculated by the Brenauer-Emmet-Telle (BET) multi-point method through use of the nitrogen adsorption isotherm. In addition, the pore volume may be determined by the Barrett-Joyner-Halenda (BJH) method through use of the nitrogen adsorption isotherm.

Measurement may be performed by using, for example, a specific surface area/pore distribution-measuring apparatus (Autosorb-3) manufactured by Quantacrome Instruments as a measuring apparatus.

In the production method of this embodiment, at least one of the composite or mixture of the sulfur-based active material and the carbon material having pores described above is mixed with the ion conductor in a molten state. In one embodiment, the composite of the sulfur-based active material and the carbon material having pores is prepared in advance, and then the composite is mixed with the ion conductor in a molten state. Thus, the surface of the composite, that is, each of the top of the sulfur-based active material and the top of the carbon material is covered with the ion conductor, and hence an ion conduction path among the three materials is efficiently formed. Meanwhile, it is conceivable that even when the mixture of the sulfur-based active material and the carbon material having pores is mixed with the ion conductor in a molten state, the sulfur-based active material having a melting point lower than that of the ion conductor is melted first to produce the composite of the sulfur-based active material and the carbon material having pores, and then the ion conductor is melted to produce a similar structure.

In one embodiment, a mass ratio between the sulfur-based active material (S) and the carbon material (C) is from 1:9 to 9:1, preferably from 5:5 to 9:1.

A method of forming the composite of the sulfur-based active material and the carbon material having pores is not particularly limited. For example, the sulfur-based active material and the carbon material may be mixed and pulverized to be formed into a composite with a mixing pulverizer such as a planetary ball mill. Alternatively, the sulfur-based active material and the carbon material may be formed into a composite by being heated to a temperature equal to or more than the melting point of the sulfur-based active material in a sealed state.

The mixing of at least one of the composite or mixture of the sulfur-based active material and the carbon material having pores with the ion conductor in a molten state may be performed by heating at a temperature equal to or more than the melting point of the ion conductor. A heating temperature is adjusted in accordance with the ion conductor to be used. A substance having sublimability at normal pressure may be pressurized and mixed in a molten state. A heating time is preferably from 10 minutes to 24 hours.

The cooling of the mixture after the heating provides a positive electrode mixture precursor. A pulverization step may be performed after the cooling as required.

In one embodiment, a mass ratio among the sulfur-based active material, carbon material, and ion conductor of the positive electrode mixture precursor satisfies the following relationship:
(sulfur-based active material+carbon material):ion conductor = 50:1 to 80.

It is preferably (sulfur-based active material+carbon material):ion conductor" = 50:5 to 60.

In one embodiment, the mass ratio of the total of the sulfur-based active material (S) and the ion conductor is smaller than 5.00 to the carbon material (C). For example, when the ion conductor is phosphorus pentasulfide, the mass ratio [(S+P₂S₅)/C] is smaller than 5.00. When the mass ratio is less than 5.00, the charge-discharge characteristics of a lithium ion battery are further improved. The above-mentioned mass ratio may be 4.80 or less, 4.50 or less, 4.30 or less, 4.00 or less, 3.70 or less, or 3.50 or less. In addition, the above-mentioned mass ratio is 2.00 or more, 2.60 or more, or 3.20 or more.

The above-mentioned mass ratio may be adjusted by the blending amount of each constituent material.

The positive electrode mixture precursor of the present invention may be used as a constituent material of a lithium ion battery. For example, the positive electrode mixture precursor of the present invention itself may be used for a positive electrode mixture and a positive electrode. In addition, a positive electrode mixture may be prepared by further blending the positive electrode mixture precursor of the present invention with a solid electrolyte. Although the solid electrolyte is not particularly limited, the solid electrolyte is, for example, a sulfide solid electrolyte used in a lithium ion battery to be described later.

The mixing of the positive electrode mixture precursor and the solid electrolyte is not particularly limited, and may be adjusted in accordance with the characteristics of the solid electrolyte to be used. For example, when the solid electrolyte is crystalline and the maintenance of a crystal affects its performance, the mixing of the positive electrode mixture precursor and the solid electrolyte is performed with a relatively weak force. Meanwhile, in the case where the performance of the solid electrolyte is not degraded even when the solid electrolyte is mixed and pulverized, the mixing is preferably performed with a relatively strong force because the number of contact points between the positive electrode mixture precursor and the solid electrolyte further increases. In addition, the mixing may be performed in two or more stages.

A device for mixing the positive electrode mixture precursor and the solid electrolyte is, for example, a planetary ball mill, a tumbling mill, a bead mill, FILMIX, a Nauta mixer, a tornado mixer, a twin-screw extruder, a multi-screw roller, or a solid-phase shear kneader.

A lithium ion battery according to one embodiment of the present invention includes the above-mentioned positive electrode mixture precursor of the present invention. For example, an all-solid-state lithium ion battery may be produced by using a solid electrolyte instead of a liquid electrolyte. An all-solid-state lithium ion battery having satisfactory charge-discharge characteristics may be produced by using the positive electrode mixture precursor of the present invention. The all-solid-state lithium ion battery is described below.

The all-solid-state lithium ion battery mainly includes a positive electrode layer, a negative electrode layer, and an electrolyte layer, and the positive electrode mixture precursor of the present invention is suitable as a constituent material of the positive electrode layer. The negative electrode layer and the electrolyte layer may each be produced by a known method. In addition, a current collector is preferably used in addition to the positive electrode layer, the negative electrode layer, and the electrolyte layer, and a known current collector is used.

The solid electrolyte is not particularly limited, but is, for example, a sulfide solid electrolyte.

The sulfide solid electrolyte is a solid electrolyte that contains at least a sulfur atom and expresses an ion conductivity resulting from a lithium ion therein. The electrolyte is a solid electrolyte that contains preferably a lithium atom and a phosphorus atom, more preferably a lithium atom, a phosphorus atom, and a halogen atom in addition to the sulfur atom, and has an ion conductivity resulting from the lithium atom.

The sulfide solid electrolyte may be an amorphous sulfide solid electrolyte, or may be a crystalline sulfide solid electrolyte.

### (Amorphous Sulfide Solid Electrolyte)

Any electrolyte may be adopted as the amorphous sulfide solid electrolyte without any particular limitation as long as the electrolyte contains at least a sulfur atom and expresses an ion conductivity resulting from a lithium ion therein. Typical preferred examples thereof include a solid electrolyte containing a sulfur atom, a lithium atom, and a phosphorus atom, the electrolyte including lithium sulfide and phosphorus sulfide, such as Li₂S-P₂S₅; a solid electrolyte including lithium sulfide, phosphorus sulfide, and a lithium halide, such as Li₂S-P₂S₅-LiI, Li₂S-P₂S₅-LiCl, Li₂S-P₂S₅-LiBr, or Li₂S-P₂S₅-LiI-LiBr; and a solid electrolyte further containing any other element, such as an oxygen element or a silicon element, in addition to a sulfur element, such as Li₂S-P₂S₅-Li₂O-LiI or Li₂S-SiS₂-P₂S₅-LiI. From the viewpoint of obtaining a higher ion conductivity, a solid electrolyte including lithium sulfide, phosphorus sulfide, and a lithium halide, such as Li₂S-P₂S₅-LiI, Li₂S-P₂S₅-LiCl, Li₂S-P₂S₅-LiBr, or Li₂S-P₂S₅-LiI-LiBr, is preferred.

The kind of an element for forming the amorphous sulfide solid electrolyte may be identified with, for example, an ICP optical emission spectrometer.

When the amorphous sulfide solid electrolyte includes at least Li₂S-P₂S₅, a molar ratio between Li₂S and P₂S₅ is preferably 65 to 85:15 to 35, more preferably 70 to 80:20 to 30, still more preferably 72 to 78:22 to 28 from the viewpoint of obtaining high chemical stability and a higher ion conductivity.

When the amorphous sulfide solid electrolyte is, for example, Li₂S-P₂S₅-LiI-LiBr, the total of the contents of lithium sulfide and phosphorus pentasulfide is preferably from 60 mol% to 95 mol%, more preferably from 65 mol% to 90 mol%, still more preferably from 70 mol% to 85 mol%. In addition, the ratio of lithium bromide to the total of lithium bromide and lithium iodide is preferably from 1 mol% to 99 mol%, more preferably from 20 mol% to 90 mol%, still more preferably from 40 mol% to 80 mol%, particularly preferably from 50 mol% to 70 mol%.

When the amorphous sulfide solid electrolyte contains a lithium atom, a sulfur atom, a phosphorus atom, and a halogen atom, a blending ratio (molar ratio) among these atoms is preferably 1.0 to 1.8:1.0 to 2.0:0.1 to 0.8:0.01 to 0.6, more preferably 1.1 to 1.7:1.2 to 1.8:0.2 to 0.6:0.05 to 0.5, still more preferably 1.2 to 1.6:1.3 to 1.7:0.25 to 0.5:0.08 to 0.4.

In addition, when bromine and iodine are used in combination as halogen atoms, a blending ratio (molar ratio) among the lithium atom, the sulfur atom, the phosphorus atom, a bromine atom, and an iodine atom is preferably 1.0 to 1.8:1.0 to 2.0:0.1 to 0.8:0.01 to 0.3:0.01 to 0.3, more preferably 1.1 to 1.7:1.2 to 1.8:0.2 to 0.6:0.02 to 0.25:0.02 to 0.25, more preferably 1.2 to 1.6:1.3 to 1.7:0.25 to 0.5:0.03 to 0.2:0.03 to 0.2, still more preferably 1.35 to 1.45:1.4 to 1.7:0.3 to 0.45:0.04 to 0.18:0.04 to 0.18. When the blending ratio (molar ratio) among the lithium atom, the sulfur atom, the phosphorus atom, and the halogen atoms is set within the above-mentioned ranges, it becomes easier to obtain a solid electrolyte having a higher ion conductivity, the electrolyte having a thio-LISICON Region II-type crystal structure to be described later.

In addition, although the shape of the amorphous sulfide solid electrolyte is not particularly limited, the shape may be, for example, a particulate shape. The average particle diameter (D₅₀) of a particulate amorphous sulfide solid electrolyte may fall within the range of, for example, from 0.01 µm to 500 µm, or from 0.1 µm to 200 µm.

The term "average particle diameter (D₅₀)" as used herein refers to a particle diameter defined as follows: when a particle diameter distribution cumulative curve is drawn, the numbers of particles are sequentially added up from the number of particles each having the smallest particle diameter; and the particle diameter at which the resultant value reaches 50% of the total number of the particles is defined as the average particle diameter. The term "volume distribution average particle diameter" refers to an average particle diameter that may be measured with, for example, a laser diffraction/scattering particle diameter distribution-measuring apparatus.

### (Crystalline Sulfide Solid Electrolyte)

The crystalline sulfide solid electrolyte may be, for example, a so-called glass ceramic obtained by heating the above-mentioned amorphous sulfide solid electrolyte to a temperature equal to or more than its crystallization temperature, and sulfide solid electrolytes having the following crystal structures may each be adopted.

A crystal structure that a crystalline sulfide solid electrolyte containing a lithium atom, a sulfur atom, and a phosphorus atom may have is, for example, a Li₃PS₄ crystal structure, a Li₄P₂S₆ crystal structure, a Li₇PS₆ crystal structure, a Li₇P₃S₁₁ crystal structure, or a crystal structure having peaks near Bragg angles 2θ of 20.2° and 23.6° (e.g., JP 2013-16423 A).

In addition, a crystal structure that a crystalline sulfide solid electrolyte containing a lithium atom, a sulfur atom, a phosphorus atom, and a halogen atom may have is, for example, a Li₄₋ₓGe₁₋ₓPₓS₄-based thio-LISICON Region II-type crystal structure (see Kanno et al., Journal of The Electrochemical Society, 148(7) A742-746 (2001)) or a crystal structure similar to the Li₄₋ₓGe₁₋ₓPₓS₄-based thio-LISICON Region II type (see Solid State Ionics, 177 (2006), 2721-2725)). The term "thio-LISICON Region II-type crystal structure" as used herein refers to any of a Li₄₋ₓGe₁₋ₓPₓS₄-based thio-LISICON Region II-type crystal structure and the crystal structure similar to the Li₄₋ₓGe₁₋ₓPₓS₄-based thio-LISICON Region II type.

In X-ray diffraction measurement with a CuKa ray, the diffraction peaks of the Li₃PS₄ crystal structure appear near, for example, Bragg angles 2θ of 17.5°, 18.3°, 26.1°, 27.3°, and 30.0°. The diffraction peaks of the Li₄P₂S₆ crystal structure appear near, for example, Bragg angles 2θ of 16.9°, 27.1°, and 32.5°. The diffraction peaks of the Li₇PS₆ crystal structure appear near, for example, Bragg angles 2θ of 15.3°, 25.2°, 29.6°, and 31.0°. The diffraction peaks of the Li₇P₃S₁₁ crystal structure appear near, for example, Bragg angles 2θ of 17.8°, 18.5°, 19.7°, 21.8°, 23.7°, 25.9°, 29.6°, and 30.0°. The diffraction peaks of the Li₄₋ₓGe₁₋ₓPₓS₄-based thio-LISICON Region II-type crystal structure appear near, for example, Bragg angles 2θ of 20.1°, 23.9°, and 29.5°. The diffraction peaks of the crystal structure similar to the Li₄₋ₓGe₁₋ₓPₓS₄-based thio-LISICON Region II type appear near, for example, Bragg angles 2θ of 20.2° and 23.6°. Those peak positions may each vary within the range of ±0.5°.

In addition, the crystal structure of the crystalline sulfide solid electrolyte is, for example, an argyrodite-type crystal structure. Examples of the argyrodite-type crystal structure include a Li₇PS₆ crystal structure; crystal structures represented by the composition formulae Li₇₋ₓP_{1-y}Si_{y}S₆ and Li₇₊ₓP_{1-y}Si_{y}S₆ ("x" represents from -0.6 to 0.6 and "y" represents from 0.1 to 0.6), the structures each having a Li₇PS₆ structural skeleton; a crystal structure represented by Li_{7-x-2y}PS_{6-x-y}Clₓ (0.8≤x≤1.7 and 0<y≤-0.25x+0.5); and a crystal structure represented by Li₇₋ₓPS₆₋ₓHaₓ (Ha represents Cl or Br, and "x" preferably represents from 0.2 to 1.8).

The crystal structure of the crystalline sulfide solid electrolyte is preferably the Li₃PS₄ crystal structure, the thio-LISICON Region II-type crystal structure, or the argyrodite-type crystal structure out of the above-mentioned crystal structures.

Although the shape of the crystalline sulfide solid electrolyte is not particularly limited, the shape may be, for example, a particulate shape. As in the average particle diameter (D₅₀) of the amorphous sulfide solid electrolyte described above, the average particle diameter (D₅₀) of a particulate crystalline sulfide solid electrolyte may fall within the range of, for example, from 0.01 µm to 500 µm, or from 0.1 µm to 200 µm.

### Examples

### [Solid Electrolyte]

### Production Example 1 (Production of Solid Electrolyte A)

0.4398 g of lithium sulfide, 0.7084 g of phosphorus pentasulfide, 0.2133 g of lithium iodide, 0.1384 g of lithium bromide, and 10 zirconia-made balls each having a diameter of 10 mm were loaded into a 45 mL zirconia-made pot, and the pot was sealed. The materials were mixed (mechanically milled) with a planetary ball mill device (manufactured by Fritsch, model number: P-7) at a rotation speed of 370 rpm for 40 hours to provide powder. The resultant powder was heated at 195°C for 3 hours to provide a solid electrolyte A.

### Production Example 2 (Production of Solid Electrolyte B)

15.3 g of lithium sulfide and 24.7 g of phosphorus pentasulfide were loaded into a 1 L reaction tank with a stirring blade under a nitrogen atmosphere. The stirring blade was operated, and then 400 mL of tetrahydrofuran cooled to -20°C was loaded into the container. After the temperature of the mixture had been naturally increased to room temperature, the mixture was stirred for 72 hours, and the resultant reaction liquid slurry was loaded into a glass filter (pore size: from 40 µm to 100 µm) to provide a solid content. The solid content was dried at 90°C to provide Li₃PS₄ powder (purity: 90% by mass). 1.70 g of the resultant Li₃PS₄ powder, 0.19 g of lithium bromide, and 0.28 g of lithium iodide were loaded into a Schlenk flask with a stirring bar (capacity: 100 mL) under a nitrogen atmosphere. After the stirring bar had been rotated, 20 mL of tetramethylethylenediamine (TMEDA) serving as a complexing agent was added to the mixture, and the whole was stirred for 12 hours. The resultant electrolyte precursor-containing material was dried under a vacuum at room temperature to provide a powder electrolyte precursor. The resultant electrolyte precursor was heated at 120°C for 2 hours under a vacuum, and was further heated at 140°C for 2 hours under a vacuum to provide a solid electrolyte B.

### Production Example 3 (Production of Solid Electrolyte C)

Lithium sulfide (Li₂S), phosphorus pentasulfide (P₂S₅), lithium bromide (LiBr), and lithium chloride (LiCl) were weighed so that their molar ratio "Li₂S:P₂S₅:LiBr:LiCl" became 47.5:12.5:15.0:25.0, followed by rough mixing under a nitrogen atmosphere.

The raw material mixture was dispersed in a mixed solvent, which had been obtained by adding 2% by mass of dehydrated isobutyronitrile with respect to the raw material mixture to dehydrated toluene, to prepare a slurry having a concentration of about 10% by mass.

A bead mill was operated under the conditions of a peripheral speed of 12 m/s and a flow rate of 500 mL/min, and the slurry was loaded into the mill, followed by a circulation operation for 1 hour. Thus, a mixture was obtained.

After the solvent of the resultant mixture had been removed, the residue was heated at from 400°C to 430°C for 2 hours in an electric furnace. After that, the heated product was slowly cooled to provide a raw material sulfide solid electrolyte.

Under a nitrogen atmosphere, the raw material sulfide solid electrolyte was dispersed in dehydrated toluene, and the dispersion was loaded into the zirconia-made pot of planetary ball mill device (manufactured by Fritsch: model number: P-7) together with a zirconia-made ball having a diameter of 0.3 mm, followed by the establishment of an inert atmosphere in the pot. The resultant was treated for 2 hours at a number of revolutions of the planetary ball mill of 150 rpm to provide a slurry containing an atomized sulfide solid electrolyte. After the slurry had been transferred to a Schlenk flask purged with nitrogen, the slurry was dried at room temperature for 1 hour with a vacuum pump, and was then heated to from 80°C to 100°C so that a solvent in the atomized sulfide solid electrolyte was further removed (dried under reduced pressure). Thus, a solid electrolyte C was obtained.

### [Positive Electrode Mixture Precursor]

### Example 1

### (1) Production of Composite Powder

Activated carbon (manufactured by Kansai Coke and Chemicals Co., Ltd., MSC-30SSS) and sulfur were loaded into a glass bottle at a mass ratio of 3:7, and were sealed in a SUS tube container. The mixture was heated in an electric furnace at 150°C for 6 hours and at 300°C for 2.75 hours to provide powder of a composite of activated carbon and sulfur (S-C composite).

### (2) Production of Positive Electrode Mixture Precursor

The powder of the composite obtained in the above-mentioned section (1) and phosphorus pentasulfide (manufactured by Italmatch Chemicals S.p.A, melting point: from 286°C to 290°C) were loaded into a Tammann tube having an inner diameter of 12 mm at a mass ratio of 0.7143:0.2857, and were sealed in a SUS tube container. The mixture was heated in an electric furnace at 350°C for 6 hours to provide a positive electrode mixture precursor.

### Example 2

A positive electrode mixture precursor was obtained in the same manner as in Example 1 except that the powder of the composite obtained in the above-mentioned section (1) of Example 1 and phosphorus pentasulfide (manufactured by Italmatch Chemicals S.p.A, melting point: from 286°C to 290°C) were loaded into a Tammann tube having an inner diameter of 12 mm at a mass ratio of 0.8333:0.1667.

### Example 3

Activated carbon (manufactured by Kansai Coke and Chemicals Co., Ltd., MSC-30SSS), sulfur, and phosphorus pentasulfide (manufactured by Italmatch Chemicals S.p.A, melting point: from 286°C to 290°C) were loaded into a Tammann tube having an inner diameter of 12 mm at a mass ratio of 0.2143:0.5000:0.2857, and were sealed in a SUS tube container. The mixture was heated in an electric furnace at 350°C for 6 hours to provide a positive electrode mixture precursor.

### Example 4

A positive electrode mixture precursor was obtained in the same manner as in Example 1 except that the powder of the composite obtained in the above-mentioned section (1) of Example 1, phosphorus pentasulfide (manufactured by Italmatch Chemicals S.p.A, melting point: from 286°C to 290°C), and sulfur were loaded into a Tammann tube having an inner diameter of 12 mm at a mass ratio of 0.7143:0.2143:0.0714.

### Example 5

A positive electrode mixture precursor was obtained in the same manner as in Example 1 except that the powder of the composite obtained in the above-mentioned section (1) of Example 1, phosphorus pentasulfide (manufactured by Italmatch Chemicals S.p.A, melting point: from 286°C to 290°C), and sulfur were loaded into a Tammann tube having an inner diameter of 12 mm at a mass ratio of 0.6667:0.2666:0.0667.

### Example 6

A positive electrode mixture precursor was obtained in the same manner as in Example 1 except that the activated carbon (manufactured by Kansai Coke and Chemicals Co., Ltd., MSC-30SSS) was changed to activated carbon (manufactured by Kansai Coke and Chemicals Co., Ltd., MSC-30).

### Comparative Example 1

The powder of the composite obtained in the above-mentioned section (1) of Example 1 was used as a positive electrode mixture precursor.

### Comparative Example 2

The powder of the composite obtained in the above-mentioned section (1) of Example 1 and phosphorus pentasulfide (manufactured by Italmatch Chemicals S.p.A, melting point: from 286°C to 290°C) were loaded into an agate mortar at a mass ratio of 0.7143:0.2857, and were mixed for 5 minutes to provide a positive electrode mixture precursor.

### Comparative Example 3

A positive electrode mixture precursor was obtained in the same manner as in Comparative Example 2 except that the powder of the composite obtained in the above-mentioned section (1) of Example 1 and phosphorus pentasulfide (manufactured by Italmatch Chemicals S.p.A, melting point: from 286°C to 290°C) were loaded into an agate mortar at a mass ratio of 0.8333:0.1667.

### [Evaluation]

The following evaluations were performed on each of the positive electrode mixture precursors produced in Examples and Comparative Examples.

### (1) X-ray Photoelectron Spectroscopy (XPS) measurement

### (a) XPS Measurement

In a glove box controlled to an Ar atmosphere having a dew point of -60°C or less, a carbon double-sided tape was attached onto a metal substrate, and a powder sample was pressed against the tape with a spatula. A spatula whose surface had been cleaned with an organic solvent such as acetone was used as the spatula. A metal perforated mask (hole diameter: 5 mm) was placed over the tape on which the powder sample had been fixed, and the mask was fixed with a screw to produce a measurement sample. The sample was introduced into an XPS apparatus with a transfer vessel so as not to be exposed to the atmosphere, and was subjected to XPS measurement. Detailed measurement conditions of the XPS are described below.

| | |
|---|---|
| XPS apparatus: | VersaProbe II (manufactured by ULVAC-PHI, Inc.) |
| X-ray source: | The measurement was performed with a monochromatized AlKα ray (1,486.6 eV) under a high powercondition of 100 W. |
| X-ray diameter: | 100 µm (measured by sweeping in a range of 200 µm×1,200 µm) |
| Pass energy: | 23.5 eV (C1s, S2p, P2p) |
| | 46.95 eV (O1s, Li1s, Br3d, I3d5/2, Cl2p) |
| Step energy: | 0.1 eV (C1s, S2p, P2p) |
| | 0.2 eV (O1s, Li1s, Br3d, I3d5/2, Cl2p) |
| Photoelectron detection angle: | 45° |

The XPS measurement was performed in the following three ways: the surface (outermost surface) of the sample, and two kinds of sample insides A and B obtained by cutting its surface layer.

The sample surface was subjected to the measurement immediately after the introduction of the sample into an ultrahigh vacuum (1.0×10⁻⁷ Pa or less) without performance of surface treatment to be described later.

The sample insides A and B were each subjected to the measurement after surface treatment with the following sputter ion gun.
Sample inside A: argon gas cluster ion beam (Ar-GCIB): 10 kV, 30 nA, 2 mm×2 mm, 5 minutes
Sample inside B: Ar monomer ion: 1 kV, 7 mA, 2 mm×2 mm, 60 minutes

### (b) Relative Intensity of Sample Surface by P2p Spectrum

MultiPak manufactured by ULVAC-PHI, Inc. was used as analysis software. A charge correction was performed by setting a peak position derived from S₈ in a spectrum derived from an S2p orbital to 164.1 eV. The background of a spectrum derived from a P2p orbital was subtracted by the Shirley method, and cps values (signal intensity: I) were extracted for the following three peaks: a peak having a binding energy around 135.4 eV (peak A), a peak having a binding energy around 134.25 eV (peak B), and a peak having a binding energy around 133.0 eV (peak C). After that, signal intensity ratios (I_{A}/I_{B} and I_{C}/I_{B}) were calculated. The term "around" means that the position of the binding energy may slightly vary depending on a measuring apparatus and the like. For example, the position A means a peak appearing within the range of 135.0 eV or more and 136.5 eV or less, the position B means a peak appearing within the range of 133.5 eV or more and less than 135.0 eV, and the position C means a peak appearing within the range of 132.0 eV or more and less than 133.5 eV. In addition, when a clear peak does not appear at each position, a binding energy of 135.4 eV is set as the position A, a binding energy of 134.25 eV is set as the position B, and a binding energy of 133.0 eV is set as the position C. The P2p relative intensity of the sample surface is a value at one point near the center in a measurement portion (diameter: 5 mm). In the measurement portion, it is recognized that the spectra of each element are almost the same at a total of three points, that is, a point near the center and two points distant from the center by about 500 µm each.

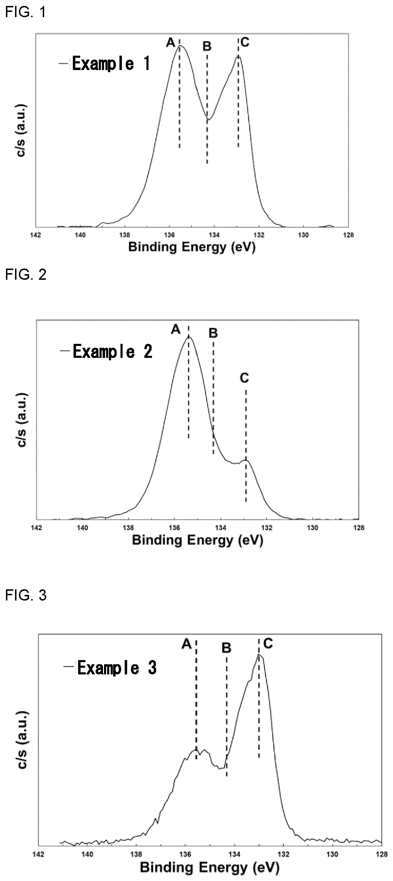

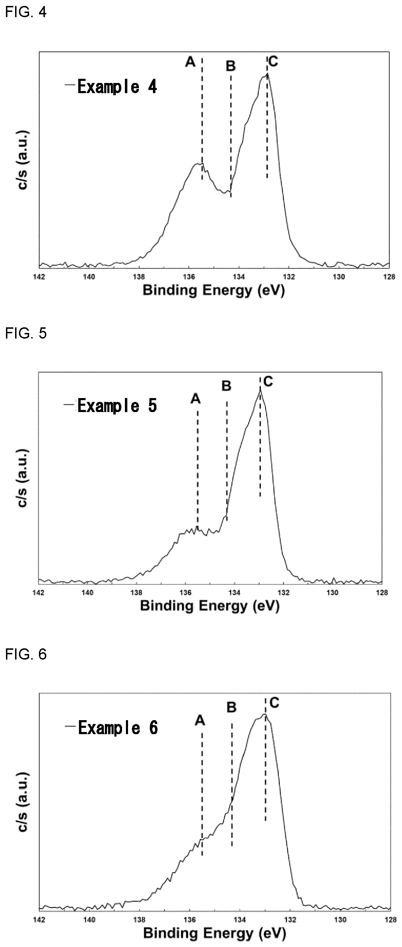

The P2p spectra of Examples 1 to 6 and Comparative Example 2 are shown in FIG. 1 to FIG. 7. In the figures, the symbol A indicates a position A where the binding energy is around 135.4 eV, the symbol B indicates a position B where the binding energy is around 134.25 eV, and the symbol C indicates a position C where the binding energy is around 133.0 eV.

### (c) Elemental Ratio C/P of Carbon Element to Phosphorus Element

MultiPak manufactured by ULVAC-PHI, Inc. was used as analysis software. A background was subtracted from each spectrum by the Shirley method, and an elemental ratio C/P was calculated from the resultant area intensity by using a relative sensitivity coefficient. The peak of a carbon element has a peak top around from 278 eV to 298 eV, and the peak of a phosphorus element has a peak top around from 123 eV to 143 eV.

The elemental ratio C/P of the sample surface was the average value of any three points in the measurement portion (diameter: 5 mm). The elemental ratio C/P of each of the sample insides A and B was the value of any one point in the measurement portion.

A C/P change rate R_{A} between the surface and the inside A, and a C/P change rate R_{B} between the surface and the inside B were calculated from the following equations: ${R}_{A} = \left(elemental ratio C/P of sample inside A\right) / \left(elemental ratio C/P of surface\right) ,$ and ${R}_{B} = \left(elemental ratio C/P of sample inside B\right) / \left(elemental ratio C/P of surface\right) .$

### (d) Area ratio (S₈ peak/PSx peak) of peak of S₈ to peak of PSx on sample surface by S2p spectrum

MultiPak manufactured by ULVAC-PHI, Inc. was used as analysis software. The peak of a sulfur element has a peak top in the range of from 155 eV to 175 eV. A charge correction was performed by setting a peak position derived from S₈ in a spectrum derived from an S2p orbital to 164.1 eV. The Shirley method was used for background subtraction. An abundance ratio (area ratio) between a PS₄-like product (hereinafter referred to as "PSx") and S₈ was determined by subjecting the S2p spectrum to waveform separation. Respective binding energies were 164.1 eV (S₈, 2p3/2), from 165.2 eV to 165.4 eV (S₈, S2p1/2), from 162.40 eV to 162.60 eV (PSx, S2p3/2), and from 163.6 eV to 163.8 eV (PSx, S2p1/2), and a fitting was performed with a full width at half maximum of 1.1 eV or more and less than 1.3 eV. The ratio of the area of the peak of S₈ to the area of the peak of the PSx on the sample surface is a value at one point near the center in the measurement portion (diameter: 5 mm). It was recognized that the state spectra of each element at a total of three points on the sample surface, that is, a point near the center and two points distant from the center by about 500 µm each were substantially the same.

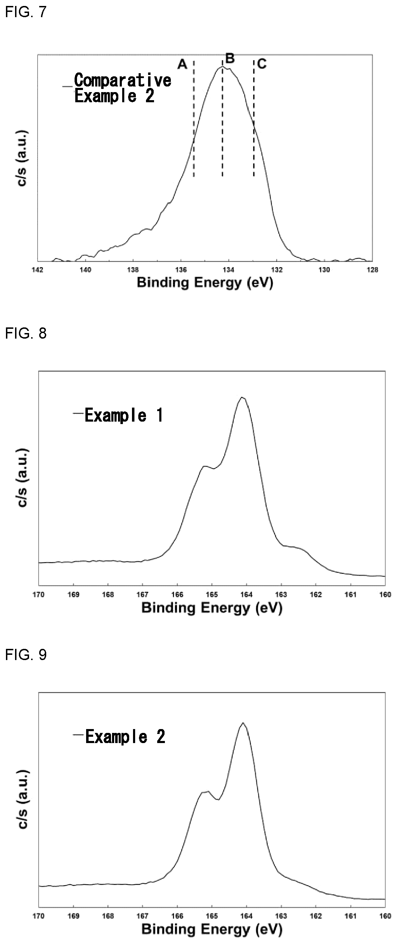

The S2p spectra of Examples 1 and 2, and Comparative Example 2 are shown in FIG. 8 to FIG. 10. In addition, the evaluation results of the XPS measurement are shown in Table 1. The column "State or P₂S₅" in the table indicated a state at the time of the mixing of the S-C composite and] P₂S₅

| | State of P₂S₅ | Blending ratio (mass) | | | (S+P2S5) IC mass ratio | I_{A}/I_{B} | I_{C}/I_{B} | C/P of surface | C/P change rate between surface and inside A | C/P change rate between surface and inside B | Peak area ratio S₈/PSx |
|---|---|---|---|---|---|---|---|---|---|---|---|
| | | Sulfur (S) | Carbon material (C) | P₂S₅ | | | | | | | |
| Example 1 | Molten | 35 | 15 | 20 | 3. 67 | 1.70 | 1. 59 | 7. 62 | 1. 253 | 0.787 | 7. 00 |
| Example 2 | Molten | 35 | 15 | 10 | 3. 00 | 2. 17 | 0.71 | 12. 59 | 1. 327 | 0.785 | 11. 67 |
| Example 3 | Molten | 35 | 15 | 20 | 3. 67 | 1. 03 | 2.06 | 4. 11 | 1.031 | 1. 087 | 5. 57 |
| Example 4 | Molten | 40 | 15 | 15 | 3.67 | 1. 19 | 2. 20 | 5.89 | 1.264 | 0. 956 | 6. 87 |
| Example 5 | Molten | 40 | 15 | 20 | 4.00 | 0.70 | 2.34 | 5. 16 | 1. 806 | 0.990 | 6. 36 |
| Example 6 | Molten | 35 | 15 | 20 | 3.67 | 0.66 | 1. 76 | 4.47 | 1. 333 | 0.749 | 5.94 |
| Comparative Example 1 | Unmixed | 35 | 15 | 0 | 2. 33 | - | - | - | - | - | - |
| Comparative Example 2 | Solid | 35 | 15 | 20 | 3.67 | 0.63 | 0. 73 | 23.60 | 0.929 | 0.338 | 16. 28 |
| Comparative Example 3 | Solid | 35 | 15 | 10 | 3. 00 | Unmeasured | Unmeasured | Unmeasured | Unmeasured | Unmeasured | Unmeasured |

As shown in Table 1, in each of Examples, at least one of the signal intensity ratios I_{A}/I_{B} and I_{C}/I_{B} at the binding energy positions A, B, and C was larger than 0.8. In this analysis, a peak derived from P₂S₅ appears at the position B. In Comparative Example 2, the peak B clearly appeared at the position B, and hence it was suggested that P₂S₅ existed in an intact chemical state. Meanwhile, in each of Examples, it was recognized that the peaks A and C appeared instead of the peak B. The peaks A and C each indicate the presence of a modified product of P₂S₅. In each of Examples, P₂S₅ mixed in a molten state with the S-C composite may exist in the positive electrode mixture precursor in a chemical state different from the original state. It is inferred that the peak A indicates a component containing an element, such as O or C derived from, for example, activated carbon, in addition to P and S in P₂S₅ because the peak A appears at relatively high binding energies. A carbon material such as activated carbon generally contains C and O. The peak A may indicate a component produced by a reaction between molten P₂S₅ and part of the activated carbon inside, or on the surface of, the activated carbon. It is inferred that the peak C indicates a component like P₂Sx (5<x), which is not P₂S₅ but does not contain O, C, or the like, because the peak C appears at relatively low binding energies and a difference in binding energy from P₂S₅ is small. It is conceivable that in each of Examples, a component produced inside, or on the surface of, the activated carbon appears as the peak C by virtue of an influence of the production of the component of the peak A at the time of the melting of P₂S₅ and a reaction with sulfur also in a molten state.

Comparison between the results of Example 1 and Example 2 having different blending amounts of P₂S₅ at the time of its melt mixing recognized that the peak C had a higher signal intensity in Example 1 having a larger amount of P₂S₅, while the peaks A had comparable signal intensities. Accordingly, as a change of the molten P₂S₅, it is conceivable that the production of the component indicated by the peak A by a reaction inside, or on the surface of, the activated carbon preferentially occurs, the remaining portion similarly changes into the component indicated by the peak C inside, or near the surface of, the activated carbon, and both the components cover the S-C composite.

All of the foregoing results may indicate that P₂S₅ mixed in a molten state covered the periphery of the S-C composite to form a strong interface.

In addition, in each of Examples, the elemental ratio C/P of carbon to phosphorus on the surface of the positive electrode mixture precursor reduced. This is probably because of the following reason: when P₂S₅ in a molten state was brought into contact with the S-C composite, P₂S₅ and/or the modified product of P₂S₅ covered the surface of the S-C composite; as a result, the amount of phosphorus detected on the surface relatively increased, and hence the amount of carbon reduced.

In addition, in each of Examples, the change rates of the C/P of the inside A and the inside B to the C/P on the surface of the positive electrode mixture precursor increased. Similarly to the reason described above, this is probably because in each of Examples in each of which the S-C composite is covered with P₂S₅ and/or the modified product of P₂S₅, the abundance ratios of each component are different between the surface of the positive electrode mixture precursor and the inside thereof extremely close to the surface, and hence an uneven distribution of each component in the depth direction thereof is promoted.

In addition, it was recognized that the area ratio of the PSx peak to the S₈ peak increased in each of Examples. This is probably because of the following reason: the amount of the S-C composite exposed on the surface of the positive electrode mixture precursor relatively reduces in each of Examples in each of which the surface of the composite is covered with P₂S₅ and/or the modified product of P₂S₅; thus, the PSx peak, which is a peak derived from P₂S₅ and/or the modified product of P₂S₅, is detected strongly relative to the S₈ peak in the S-C composite.

### (2) Calculation of Main Component Occupancy Rate by Energy Dispersive X-ray Spectroscopy (SEM-EDS Analysis) of Scanning Electron Microscope Image (a) Production of Positive Electrode Mixture Precursor Pellet

100 mg of the positive electrode mixture precursor powder was loaded into a MACOR cylinder having a diameter of 10 mm, and was subjected to pressure molding. After that, a molded body was extracted from the cylinder to provide a positive electrode mixture precursor pellet.

### (b) SEM-EDS Analysis

The positive electrode mixture precursor pellet was split in a vertical direction, and a cross section of the positive electrode mixture precursor pellet was exposed by performing ion milling treatment (manufactured by Hitachi High-Tech Corporation, IM4000) on an exposed surface. SEM-EDS elemental mapping measurement was performed on the resultant cross section with a SEM (manufactured by Hitachi High-Tech Corporation, SU8220) and an EDS (manufactured by Bruker Corporation, QUANTAX FlatQUAD) to provide secondary electron images and EDS images of each component (sulfur, carbon, phosphorus, or the like) in 10 visual fields. The measurement was performed at an observation magnification of 5,000 times and an acceleration voltage of 10 kV in a scanning region of 1,024×768. In the EDS mapping, images obtained by subjecting SEM images of the cross section to smoothing processing with the software of the above-mentioned EDS device were used.

At the time of the SEM-EDS elemental mapping measurement, the region subjected to the cross section processing by ion milling was divided into two equal parts in top and bottom directions, and each of the regions divided into two equal parts was divided into five equal parts in left and right directions. SEM-EDS elemental mapping was acquired at the center of each of the 10 divided regions thus obtained at an observation magnification of 5,000 times.

### (c) Calculation of Main Component Occupancy Rate

OpenCV (4.5.1) of Python (3) was used for the processing of each of the images obtained by the above-mentioned procedure. For one visual field, the EDS luminance information of carbon, phosphorus, and sulfur of each pixel was arrayed, and was converted into an HSV color space file format. The HSV file was smoothed with a median filter. The smoothed image was segmented by simple linear iterative clustering, and the average value of the respective HSV luminances was acquired for each segment. For each segment, such a component that the average value of the respective HSV luminances was 25 or more was set as a main component, and its ratio to the visual field was calculated as a main component occupancy rate. The results are shown in Table 2.

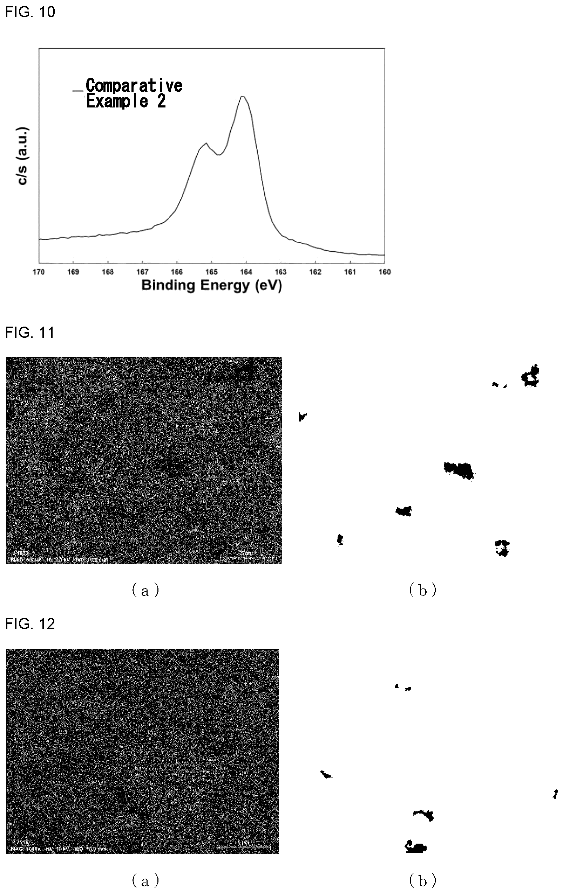

FIG. 11(a) is image data in which the EDS mappings of C, P, and S of Example 1 are superimposed, and FIG. 11(b) is an image obtained by subjecting FIG. 11(a) to image processing.
FIG. 12(a) is image data in which the EDS mappings of C, P, and S of Example 2 are superimposed, and FIG. 12(b) is an image obtained by subjecting FIG. 12(a) to image processing.

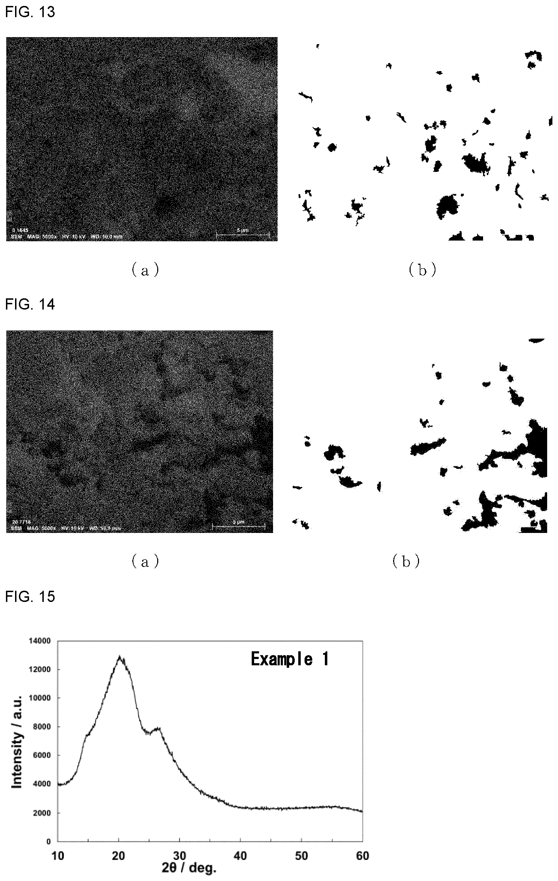

FIG. 13(a) is image data in which the EDS mappings of C, P, and S of Comparative Example 2 are superimposed, and FIG. 13(b) is an image obtained by subjecting FIG. 13(a) to image processing.
FIG. 14(a) is image data in which the EDS mappings of C, P, and S of Comparative Example 3 are superimposed, and FIG. 14(b) is an image obtained by subjecting FIG. 14(a) to image processing.
A white portion in each figure (b) indicates a main component region.

**Table 2**

| | State of P₂S₅ | Blending ratio (mass) | | | Main component occupancy rate |
|---|---|---|---|---|---|
| | | Sulfur | Activated carbon | P₂S₅ | |
| Example 1 | Molten | 35 | 15 | 20 | 98.8% |
| Example 2 | Molten | 35 | 15 | 10 | 96.2% |
| Comparative Example 1 | Unmixed | 35 | 15 | 0 | - |
| Comparative Example 2 | Solid | 35 | 15 | 20 | 94.9% |
| Comparative Example 3 | Solid | 35 | 15 | 10 | 93.7% |

As shown in Table 2, it can be recognized that the main component occupancy rate is high in each of Examples. This is probably because both the S-C composite, and P₂S₅ and/or the modified product of P₂S₅ existed close to each other by virtue of the covering.

### (3) BET Specific Surface Area

The BET specific surface area of each of the positive electrode mixture precursors was measured with a specific surface area/pore distribution-measuring apparatus (Autosorb-3) manufactured by Quantacrome Instruments. The results are shown in Table 3.

**Table 3**

| | State of P₂S₅ | Blending ratio (mass) | | | Specific surface area (cm²/g) |
|---|---|---|---|---|---|
| | | Sulfur | Activated carbon | P₂S₅ | |
| Example 1 | Molten | 35 | 15 | 20 | 3.37 |
| Example 2 | Molten | 35 | 15 | 10 | 7.37 |
| Comparative Example 1 | Unmixed | 35 | 15 | 0 | 15.4 |
| Comparative Example 2 | Solid | 35 | 15 | 20 | 8.58 |
| Comparative Example 3 | Solid | 35 | 15 | 10 | 7.84 |

It can be recognized from Table 3 that the specific surface area of each of the precursors obtained in Examples is small. This is probably because the surface of the S-C composite was covered with P₂S₅ and/or the modified product of P₂S₅ by mixing P₂S₅ in a molten state into the S-C composite.

### (4) Crystallinity Evaluation by X-ray Diffraction Measurement (XRD)

Each of the positive electrode mixture precursor powders was loaded into a groove having a diameter of 20 mm and a depth of 0.2 mm, and was leveled with glass to provide a sample. The sample was sealed with a Kapton film for XRD, and was subjected to XRD measurement without exposure to air.

The XRD measurement was performed by using a powder X-ray diffraction measuring apparatus D2 PHASER of Bruker Corporation under the following measurement conditions.

| | |
|---|---|
| Tube voltage: | 30 kV |
| Tube current: | 10 mA |
| X-ray wavelength: | Cu-Kα ray (1.5418 Å) |
| Optical system: | Concentrating method |
| Slit configuration: | Use of Soller slit: 4° (both incident side and receiving side), divergence slit: 1 mm, Kβ filter (Niplate: 0.5%), and an air scatter screen having an aperture of 3 mm |
| Detector: | Semiconductor detector |
| Measurement range: | Bragg angles 2θ of from 10 deg to 60 deg |
| Step width, scanning speed: | 0.05 deg, 0.05 deg/sec |

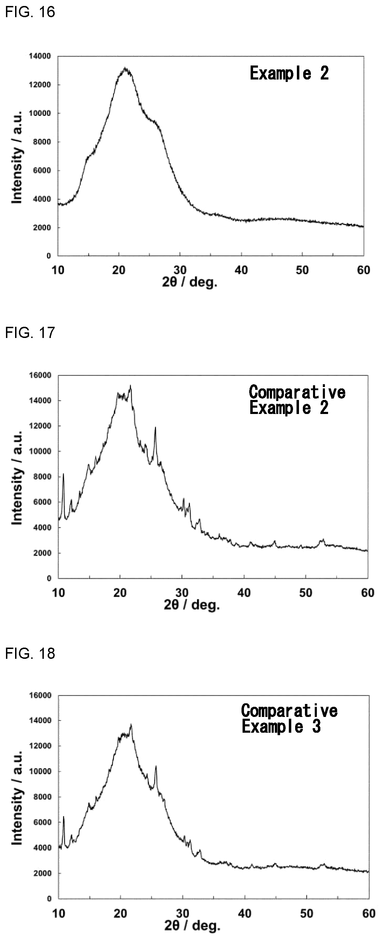

The presence or absence of the crystallinity of the sample was recognized from the presence or absence of a crystal peak in the resultant spectrum. P₂S₅ has peaks at positions, such as "Bragg angles 2θ of 10.81°, 12.12°, 14.90°, 16.07°, 21.68°, 25.67°, and 30.33°", and hence it was recognized whether or not crystal peaks were held at the above-mentioned positions in a state of the positive electrode mixture precursor. The results are shown in Table 4. The X-ray diffraction charts of Examples 1 and 2, and Comparative Examples 2 and 3 are shown in FIG. 15 to FIG. 18.

**Table 4**

| | State of P₂S₅ | Blending ratio (mass) | | | XRD crystal peak |
|---|---|---|---|---|---|
| | | Sulfur | Activated carbon | P₂S₅ | |
| Example 1 | Molten | 35 | 15 | 20 | Absent |
| Example 2 | Molten | 35 | 15 | 10 | Absent |
| Comparative Example 1 | Unmixed | 35 | 15 | 0 | - |
| Comparative Example 2 | Solid | 35 | 15 | 20 | Present |
| Comparative Example 3 | Solid | 35 | 15 | 10 | Present |

It can be seen from Table 4 that no diffraction peak derived from the crystal of P₂S₅ is observed in each of Examples. It is expected that the crystallinity of P₂S₅ disappears by the melting thereof, and P₂S₅ exists around the S-C composite while remaining amorphous, to thereby form a strong interface.

### (5) Area Ratio of Each Phosphorus Component by Solid ³¹P-NMR Measurement

The area ratio of each phosphorus component was measured by using the following apparatus under the following conditions.

| | |
|---|---|
| Apparatus: | ECZL400G (manufactured by JEOL Ltd.) |
| Magnetic field strength: | 400 MHz |
| Detector: | 3.2 mm AutoMAS probe |
| Solid NMR sample tube diameter: | 3.2 mm |
| Observation nucleus: | ³¹P |
| Observation frequency: | 161.835 MHz |
| Measurement temperature: | Room temperature |
| Pulse sequence: | Single pulse |
| 90° pulse length: | 3.4 µs |
| Flip angle: | 45° |
| Number of FID acquisition points: | 1,024 points |
| Waiting time after FID measurement until next pulse application: | 1,500 s |
| Number of revolutions of magic angle spinning (MAS): | 14 kHz |
| Number of scans: | 64 times |
| Measurement range: | from 400 ppm to -300 ppm |
| External reference: | NH₄H₂PO₄ (chemical shift: 1.00 ppm) |

As a data processing condition of the solid ³¹P-NMR measurement, an exponential function was used as a window function, and a value within a range in which the full width at half maximum of a peak did not significantly change in accordance with the signal-to-noise ratio of each sample was used as a line broadening value. The actual values of the line broadening value were described in Examples and Comparative Examples. Backward linear prediction was not used.

When peak separation was performed, the resultant solid ³¹P-NMR spectrum was analyzed, and a peak to be separated was determined. From each NMR peak (experimental value) on the solid ³¹P-NMR spectrum, the calculated value of the NMR peak and the residual sum of squares R2 were calculated by using a non-linear least squares method and performing peak separation using a Gaussian function for the calculation of the separation peak.

The following literatures 1 to 3 were referred to for the assignment of each peak obtained by the waveform separation of the solid ³¹P-NMR spectrum:
Literature 1: Christian Dietrich et al., J. Mater. Chem. A, 2017, 5, 18111-18119;
Literature 2: JP 6719037 B1; and
Literature 3: JP 7297911 B2.

For example, as disclosed in Literature 1, a peak around 125 ppm obtained by the waveform separation was assigned to PS₃⁻. As disclosed in Literature 2, a peak around 106 ppm was assigned to P₂S₆⁴⁻ (amorphous), a peak around 91 ppm was assigned to P₂S₇⁴⁻ (amorphous), and a peak around 84 ppm was assigned to PS₄³⁻ (amorphous). As disclosed in Literature 3, a peak around from 50 ppm to 60 ppm obtained by the waveform separation was assigned to P₂S₅. P₂S₅ in this assignment may be generally the total value of a P₄S₁₀ skeleton, which is the main component of phosphorus pentasulfide, a P₄S₉ skeleton, and the like. A peak with unknown assignment was observed as a peak that was not able to be assigned in Literatures 1 to 3 at -30 ppm in Example 1 or at 86 ppm in Comparative Example 2.

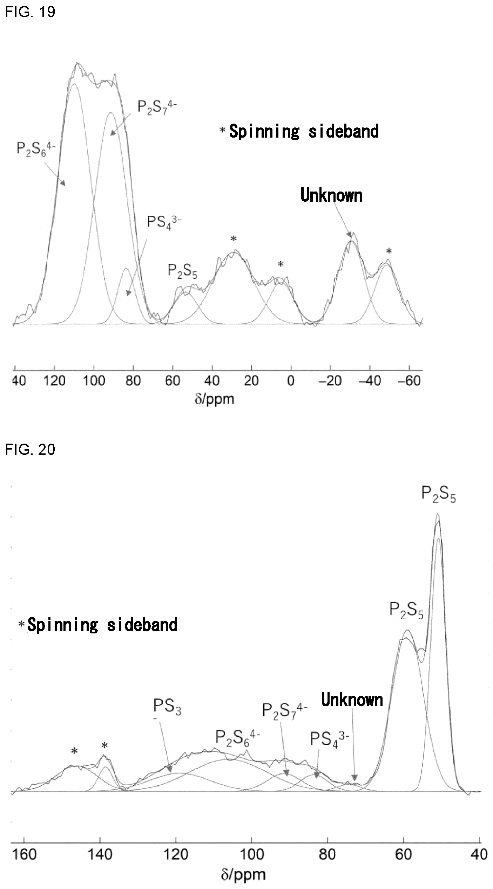

In the composition calculation of each composition obtained by the waveform separation of the solid ³¹P-NMR spectrum, the ratio of each component shown below was calculated as a percentage by using the area value of a separated peak. No spinning sideband peak was used for the composition calculation of each component. The area ratio (%) of each peak with respect to the total area of seven peaks shown in Table 5 was calculated. The results are shown in Table 5. The results of the waveform separation of the solid ³¹P-NMR spectra of Example 1 and Comparative Example 2 are shown in FIG. 19 (line broadening value: 200 Hz) and FIG. 20 (line broadening value: 100 Hz).

**Table 5**

| Phosphorus component | Example 1 | Comparative Example 2 |
|---|---|---|
| PS₃⁻ | 0% | 7.4% |
| P₂S₆⁴⁻ | 41.9% | 19.2% |
| P₂S₇⁴⁻ | 38.1% | 4.4% |
| PS₄³⁻ | 5.4% | 3.4% |
| Unknown | 0% | 1.3% |
| P₂S₅ | 3.3% | 64.3% |
| Unknown | 11.3% | 0% |

It was recognized from Table 5, and FIG. 19 and FIG. 20 that a peak component at from 50 ppm to 60 ppm was suppressed in Example as compared to Comparative Example, and in contrast, peak components around 106.0 ppm, around 91 ppm, and around 84 ppm increased. It is conceivable that in Example, the molten P₂S₅ component changed into P₂S₆⁴⁻, P₂S₇⁴⁻, PS₄²⁻, and the like by partially reacting with sulfur in the S-C composite, for example, inside, or near the surface of, the activated carbon because those peak components were assigned to P₂S₅, P₂S₆⁴⁻, P₂S₇⁴⁻, and PS₄²⁻, respectively. The foregoing may indicate that P₂S₅ mixed in a molten state covers the S-C composite in a partially modified state to form a strong interface. That is, in Example, the molten P₂S₅ covered the S-C composite to form a strong interface, and as a result, the ratio of P₂S₅ became equal to or less than a certain value (e.g., 60%), and the total value of the ratios of P₂S₆⁴⁻, P₂S₇⁴⁻, and PS₄²⁻became equal to or more than a certain value (e.g., 30%).

### [Positive Electrode Mixture]

### Example 7

0.6300 g of the positive electrode mixture precursor of Example 1 and 0.2700 g of the solid electrolyte A were loaded into a 45 mL zirconia-made pot together with 34 g of zirconia-made balls each having a diameter of 2 mm, and the pot was sealed. The materials were mixed for 1 hour at room temperature and a rotation speed of 600 rpm with a tumbling mill ("small ball mill stand", manufactured by Asahi Rika Seisakusho, model number: AV-1) to provide positive electrode mixture powder.

### Example 8

Positive electrode mixture powder was obtained in the same manner as in Example 7 except that 0.5400 g of the positive electrode mixture precursor of Example 2 and 0.3600 g of the solid electrolyte A were used.

### Example 9

Positive electrode mixture powder was obtained in the same manner as in Example 7 except that 0.6300 g of the positive electrode mixture precursor of Example 1 and 0.2700 g of the solid electrolyte B were used.

### Example 10

Positive electrode mixture powder was obtained in the same manner as in Example 7 except that 0.6300 g of the positive electrode mixture precursor of Example 1 and 0.2700 g of the solid electrolyte C were used.

### Example 11

Positive electrode mixture powder was obtained in the same manner as in Example 7 except that 0.6300 g of the positive electrode mixture precursor of Example 3 and 0.2700 g of the solid electrolyte C were used.

### Example 12

Positive electrode mixture powder was obtained in the same manner as in Example 7 except that 0.6300 g of the positive electrode mixture precursor of Example 4 and 0.2700 g of the solid electrolyte C were used.

### Example 13

Positive electrode mixture powder was obtained in the same manner as in Example 7 except that 0.6750 g of the positive electrode mixture precursor of Example 5 and 0.2250 g of the solid electrolyte C were used.

### Example 14

Positive electrode mixture powder was obtained in the same manner as in Example 7 except that 0.6300 g of the positive electrode mixture precursor of Example 6 and 0.2700 g of the solid electrolyte C were used.

### Comparative Example 4

Positive electrode mixture powder was obtained by mixing 0.4500 g of the powder of the composite obtained in the same manner as in the section (1) of Example 1 and 0.4500 g of the solid electrolyte A with a tumbling mill in the same manner as in Example 7.

### Comparative Example 5

Positive electrode mixture powder was obtained by mixing 0.4500 g of the powder of the composite obtained in the same manner as in the section (1) of Example 1, 0.1800 g of phosphorus pentasulfide, and 0.2700 g of the solid electrolyte A with a tumbling mill in the same manner as in Example 7 so that a mass ratio among activated carbon, sulfur, and phosphorus pentasulfide became the same as that in Example 7.

### Comparative Example 6

Positive electrode mixture powder was obtained by mixing 0.4500 g of the powder of the composite obtained in the same manner as in the section (1) of Example 1, 0.0900 g of phosphorus pentasulfide, and 0.3600 g of the solid electrolyte A with a tumbling mill in the same manner as in Example 7 so that a mass ratio among activated carbon, sulfur, and phosphorus pentasulfide became the same as that in Example 8.

All-solid-state lithium ion batteries were produced as described below by using the positive electrode mixtures produced in Examples and Comparative Examples described above, and were evaluated for their battery characteristics (charge-discharge characteristics).

### Production of Negative Electrode Mixture

A negative electrode mixture (also referred to as "lithium titanate (LTO) negative electrode mixture") was obtained by mixing lithium titanate ("LT-112" manufactured by Ishihara Sangyo Kaisha, Ltd.), a conductive additive ("Li-100" manufactured by Denka Company Limited, powdery acetylene black), and the solid electrolyte C in a mortar at a mass ratio of 60:5:35 for 5 minutes.

### Production of Lithium Ion Battery

100 mg of the solid electrolyte A was loaded into a MACOR cylinder having a diameter of 10 mm and subjected to pressure molding to form a solid electrolyte layer (layer of the solid electrolyte A).

Next, each of the positive electrode mixture powders was loaded onto one pressing surface of the solid electrolyte layer so that its amount became 10 mg, followed by pressure molding again.

Next, the LTO negative electrode mixture was loaded onto the other pressing surface (pressing surface opposite to the positive electrode) of the solid electrolyte layer so that its amount became 166 mg, followed by pressing. Li foil having a diameter of 9 mm and a thickness of 0.1 mm was loaded thereon, and the resultant was pressed again to produce a lithium ion battery.

### Charge-discharge Test

A constant-current charge-discharge test was performed on the lithium ion battery using the positive electrode mixture of each of Examples and Comparative Examples. The voltage range of the constant-current charge-discharge test was set to from -0.4 V to 1.3 V, and the test was performed while current values were set as shown in Table 6 at a C rate determined on the basis of a theoretical capacity of 1,672 mAh/g for sulfur. Regarding charging, CC-CV charging was performed, in which constant-voltage charging with 0.02 C as a termination condition was performed after constant-current charging, and regarding discharging, constant-current discharging (CC discharging) was performed. The results are shown in Table 7.

**Table 6**

| Number of cycles | Discharging (CC) | Charging (CC-CV) |
|---|---|---|
| 1 | 0.05C | 0.05C |
| 2 | 0.05C | 0.05C |
| 3 | 0.05C | 0.1C |
| 4 | 0.1C | 0.1C |
| 5 | 0.2C | 0.1C |
| 6 | 0.33C | 0.1C |
| 7 | 0.5C | 0.1C |
| 8 | 1C | 0.1C |
| 9 | 2C | 0.1C |

**Table 7**

| | Discharge capacity (mAh/g) | | | | | | |
|---|---|---|---|---|---|---|---|
| | @0. 05C | @0.1C | @0. 2C | @0. 33C | @0. 5C | @1C | @2C |
| Example 7 | 1328 | 1271 | 1108 | 845 | 550 | 208 | 52 |
| Example 8 | 864 | 700 | 531 | 359 | 224 | 88 | 24 |
| Example 9 | 1434 | 1314 | 1198 | 979 | 675 | 245 | 49 |
| Example 10 | 1492 | 1420 | 1324 | 1128 | 850 | 351 | 70 |
| Example 11 | 1691 | 1588 | 1155 | 1180 | 862 | 405 | 120 |
| Example 12 | 1581 | 1513 | 1441 | 1318 | 1066 | 551 | 189 |
| Example 13 | 1520 | 1372 | 1260 | 1115 | 947 | 498 | 158 |
| Example 14 | 1631 | 1457 | 1290 | 1204 | 1065 | 663 | 251 |
| Comparative Example 4 | 185 | 147 | 102 | 59 | 33 | 11 | 2 |
| Comparative Example 5 | 670 | 680 | 472 | 287 | 173 | 58 | 13 |
| Comparative Example 6 | 643 | 547 | 388 | 248 | 190 | 91 | 29 |

It was able to be recognized that the discharge capacities at both of a low rate and a high rate were high in each of Examples as compared to those of Comparative Examples. From the foregoing, improving effects on the charge-discharge characteristics in each of Examples in which the positive electrode mixture precursors were produced through the melting of P₂S₅ (ion conductor) were recognized. It is conceivable that in each of Examples, excellent charge-discharge characteristics were obtained by using the positive electrode mixture precursor of the present invention having a strong interface and a satisfactory ion conduction path.

### Example 15

0.6300 g of the positive electrode mixture precursor of Example 1 and 0.2700 g of the solid electrolyte A were loaded into a 45 mL zirconia-made pot together with 10 zirconia-made balls each having a diameter of 10 mm, and the pot was sealed. The materials were mixed (mechanically milled) for 20 hours at room temperature and a rotation speed of 370 rpm with a planetary ball mill (manufactured by Fritsch, model number: P-7) to provide positive electrode mixture powder. The powder was evaluated in the same manner as in Example 7. The results are shown in Table 8.

### Example 16

Positive electrode mixture powder was obtained in the same manner as in Example 15 except that 0.5400 g of the positive electrode mixture precursor of Example 2 and 0.3600 g of the solid electrolyte A were used. The evaluation results are shown in Table 8.

### Comparative Example 7

Positive electrode mixture powder was obtained by mixing 0.4500 g of the powder of the composite obtained in the same manner as in the section (1) of Example 1 and 0.4500 g of the solid electrolyte A in the same manner as in Example 15. The evaluation results are shown in Table 8.

### Comparative Example 8

Positive electrode mixture powder was obtained by mixing 0.4500 g of the powder of the composite obtained in the same manner as in the section (1) of Example 1, 0.1800 g of phosphorus pentasulfide, and 0.2700 g of the solid electrolyte A in the same manner as in Example 15 so that a mass ratio among activated carbon, sulfur, and phosphorus pentasulfide became the same as that in Example 15. The evaluation results are shown in Table 8.

### Comparative Example 9

Positive electrode mixture powder was obtained by mixing 0.4500 g of the powder of the composite obtained in the same manner as in the section (1) of Example 1, 0.0900 g of phosphorus pentasulfide, and 0.3600 g of the solid electrolyte A in the same manner as in Example 15 so that a mass ratio among activated carbon, sulfur, and phosphorus pentasulfide became the same as that in Example 16. The evaluation results are shown in Table 8.

**Table 8**

| | Discharge capacity (mAh/g) | | | | | | |
|---|---|---|---|---|---|---|---|
| | @0. 05C | @0. 1C | @0.2C | @0.33C | @0. 5C | @1C | @2C |
| Example 15 | 2069 | 1858 | 1752 | 1629 | 1138 | 826 | 289 |
| Example 16 | 1860 | 1812 | 1732 | 1545 | 1223 | 551 | 138 |
| Comparative Example 7 | 1896 | 1826 | 1716 | 1384 | 951 | 392 | 100 |
| Comparative Example 8 | 1588 | 1415 | 1340 | 1269 | 1127 | 647 | 181 |
| Comparative Example 9 | 1680 | 1577 | 1512 | 1396 | 1223 | 716 | 241 |

It can be recognized that the capacities at both of a low rate and a high rate are high in each of Examples as compared to those in Comparative Examples. In Comparative Example 7, the capacity at a high rate is low, and in Comparative Examples 8 and 9, the capacities at a low rate are low. Meanwhile, the capacities are high at both the rates in Examples.

### Example 17

### (1) First Mixing Step

1.000 g of the positive electrode mixture precursor of Example 1 was loaded into a 45 mL zirconia-made pot together with 10 zirconia-made balls each having a diameter of 10 mm, and the pot was sealed. The materials were mixed and pulverized for 20 hours at room temperature and a rotation speed of 370 rpm with a planetary ball mill (manufactured by Fritsch, model number: P-7).

### (2) Second Mixing Step

0.6300 g of the treated product of the above-mentioned section (1) (first mixture) and 0.2700 g of the solid electrolyte A were loaded into a 45 mL zirconia-made pot together with 34 g of zirconia-made balls each having a diameter of 2 mm, and the pot was sealed. The materials were mixed for 1 hour at room temperature and a rotation speed of 600 rpm with a tumbling mill ("small ball mill stand", manufactured by Asahi Rika Seisakusho, model number: AV-1) to provide positive electrode mixture powder. The powder was evaluated in the same manner as in Example 7. The results are shown in Table 9.

### Comparative Example 10

### (1) First Mixing Step

The powder of the composite obtained in the same manner as in the section (1) of Example 1 and phosphorus pentasulfide were loaded into a 45 mL zirconia-made pot together with 10 zirconia-made balls each having a diameter of 10 mm so that a mass ratio therebetween became the same as that of the treated product obtained in the section (1) of Example 17, followed by the sealing of the pot. The materials were mixed and pulverized for 20 hours at room temperature and a rotation speed of 370 rpm with a planetary ball mill (manufactured by Fritsch, model number: P-7).

### (2) Second Mixing Step

Positive electrode mixture powder was obtained by mixing 0.6300 g of the treated product of the above-mentioned section (1) (first mixture) and 0.2700 g of the solid electrolyte A in the same manner as in Example 17. The evaluation results are shown in Table 9.

**Table 9**

| | Discharge capacity (mAh/g) | | | | | | |
|---|---|---|---|---|---|---|---|
| | @0.05C | @0.1C | @0. 2C | @0.33C | @0.5C | @1C | @2C |
| Example 17 | 2007 | 1863 | 1763 | 1534 | 1185 | 531 | 155 |
| Comparative Example 10 | 1621 | 1487 | 1344 | 1040 | 703 | 227 | 45 |

It can be seen from Table 9 that the capacities at all rates are higher in Example than those in Comparative Example.

### Example 18

### (1) Production of Positive Electrode Mixture Precursor

A positive electrode mixture precursor was obtained in the same manner as in the section (2) of Example 1 except that the powder of the composite obtained in the same manner as in the section (1) of Example 1 and phosphorus pentasulfide (manufactured by Italmatch Chemicals S.p.A, melting point: from 286°C to 290°C) were loaded into a Tammann tube having an inner diameter of 12 mm at a mass ratio of 5:5.

### (2) Production of Positive Electrode Mixture Powder

0.9000 g of the positive electrode mixture precursor obtained in the above-mentioned section (1) was loaded into a 45 mL zirconia-made pot together with 10 zirconia-made balls each having a diameter of 10 mm, and the pot was sealed. The materials were mixed for 20 hours at room temperature and a rotation speed of 370 rpm with a planetary ball mill (manufactured by Fritsch, model number: P-7) to provide positive electrode mixture powder. The powder was evaluated in the same manner as in Example 7. The results are shown in Table 10.

### Comparative Example 11

0.4500 g of the powder of the composite obtained in the same manner as in the section (1) of Example 1 and 0.4500 g of phosphorus pentasulfide were loaded into a 45 mL zirconia-made pot together with 10 zirconia-made balls each having a diameter of 10 mm, and the pot was sealed. The materials were mixed for 20 hours at room temperature and a rotation speed of 370 rpm with a planetary ball mill (manufactured by Fritsch, model number: P-7) to provide positive electrode mixture powder. The evaluation results are shown in Table 10.

**Table 10**

| | Discharge capacity (mAh/g) | | | | | | |
|---|---|---|---|---|---|---|---|
| | @0.05C | @0.1C | @0.2C | @0.33C | @0.5C | @1C | @2C |
| Example 18 | 1621 | 1456 | 1364 | 1192 | 886 | 375 | 76 |
| Comparative Example 11 | 1314 | 1124 | 1017 | 879 | 669 | 280 | 63 |

It can be seen from Table 10 that the capacities at all rates are higher in Example than those in Comparative Example.

### Industrial Applicability

The positive electrode mixture precursor of the present invention and the positive electrode mixture precursor produced by the present invention may each be suitably used as, for example, the positive electrode mixture of an all-solid-state lithium ion battery and a constituent material for a positive electrode.

The positive electrode mixture of the present invention is suitable as a constituent material for a lithium ion battery. In addition, the lithium ion battery including the positive electrode mixture produced by the present invention is suitably used as, for example, a battery to be used in information-related equipment and communication equipment, such as a personal computer, a video camera, and a cellular phone, and a vehicle such as an electric vehicle.

Some embodiments and/or Examples of the present invention have been described in detail in the foregoing, but a person skilled in the art could easily make various modifications to these illustrative embodiments and/or Examples without substantially departing from the novel teachings and effects of the present invention. Accordingly, those various modifications are encompassed in the scope of the present invention.

The literatures described in this description and the contents of the application on the basis of which the present application claims Paris convention priority are incorporated herein by reference in their entirety.

The phrase "from "x" to "y"" as used herein represents the numerical range of ""x" or more and "y" or less". Upper limits and lower limits described for numerical ranges may be freely combined.

In addition, among the individual embodiments of the aspects according to the present invention, two or more embodiments that do not contradict each other may be combined, and an embodiment in which two or more embodiments are combined is also an embodiment of the aspects according to the present invention.

## Claims

1. A positive electrode mixture precursor comprising a sulfur-based active material; a carbon material having pores; and at least one of an ion conductor and a modified product of the ion conductor,
wherein the sulfur-based active material is present in at least part of an inside and an outside of the carbon material, and
at least part of the ion conductor and the modified product of the ion conductor covers at least part of the sulfur-based active material.

2. The positive electrode mixture precursor according to claim 1, wherein in a P2p spectrum in surface elemental analysis thereof by X-ray photoelectron spectroscopy, at least one of the following formulas (1) and (2) is satisfied: ${I}_{A} / {I}_{B} > 0.8$ (1) ${I}_{C} / {I}_{B} > 0.8$ (2) wherein I_{A} represents a signal intensity at a position A where a binding energy is around 135.4 eV, I_{B} represents a signal intensity at a position B where the binding energy is around 134.25 eV, and I_{C} represents a signal intensity at a position C where the binding energy is around 133.0 eV.

3. The positive electrode mixture precursor according to claim 2, wherein at least one of the ratio I_{A}/I_{B} and the ratio I_{C}/I_{B} is 1.0 or more.

4. The positive electrode mixture precursor according to claim 1, wherein an elemental ratio C/P of a carbon element to a phosphorus element determined by surface elemental analysis thereof by X-ray photoelectron spectroscopy is 20 or less.

5. The positive electrode mixture precursor according to claim 1, wherein a main component occupancy rate is 95.0% or more in elemental mapping image analysis of a scanning electron microscope image thereof by energy dispersive X-ray spectroscopy.

6. The positive electrode mixture precursor according to any one of claims 1 to 5, wherein a mass ratio of a total of the sulfur-based active material, and the ion conductor and the modified product of the ion conductor is smaller than 5.00 to the carbon material.

7. The positive electrode mixture precursor according to any one of claims 1 to 6, wherein the ion conductor has a melting point of from 130°C to 450°C.

8. The positive electrode mixture precursor according to any one of claims 1 to 7, wherein the ion conductor is a lithium ion conductive material containing one or more kinds of elements selected from lithium, boron, oxygen, and phosphorus, or a precursor thereof.

9. The positive electrode mixture precursor according to any one of claims 1 to 8, wherein the ion conductor comprises phosphorus sulfide.

10. The positive electrode mixture precursor according to any one of claims 1 to 9, wherein the ion conductor comprises phosphorus pentasulfide.

11. The positive electrode mixture precursor according to any one of claims 1 to 10, wherein the sulfur-based active material comprises elemental sulfur.

12. A method of producing a positive electrode mixture precursor comprising: mixing at least one of a composite or a mixture of a sulfur-based active material and a carbon material having pores with an ion conductor in a molten state.

13. The method of producing it according to claim 12, wherein the composite of the sulfur-based active material and the carbon material having pores is mixed with the ion conductor in a molten state.

14. The method of producing it according to claim 12 or 13, wherein a mass ratio of a total of the sulfur-based active material and the ion conductor is smaller than 5.00 to the carbon material.

15. The method of producing it according to any one of claims 12 to 14, wherein the ion conductor has a melting point of from 130°C to 450°C.

16. The method of producing it according to any one of claims 12 to 15, wherein the ion conductor is a lithium ion conductive material containing one or more kinds of elements selected from lithium, boron, oxygen, and phosphorus, or a precursor thereof.

17. The method of producing it according to any one of claims 12 to 16, wherein the ion conductor comprises phosphorus sulfide.

18. The method of producing it according to any one of claims 12 to 17, wherein the ion conductor comprises phosphorus pentasulfide.

19. The method of producing it according to any one of claims 12 to 18, wherein the sulfur-based active material comprises elemental sulfur.

20. A positive electrode mixture comprising the positive electrode mixture precursor according to any one of claims 1 to 11.

21. The positive electrode mixture according to claim 20, further comprising a solid electrolyte.

22. A positive electrode comprising the positive electrode mixture according to claim 20 or 21.

23. A lithium ion battery comprising the positive electrode mixture according to claim 20 or 21, or the positive electrode according to claim 22.
